# EUROPÄISCHE PATENTANMELDUNG

(11) **EP 2 003 361 A1**
(43) Veröffentlichungstag der Anmeldung: **17.12.2008**
(21) Anmeldenummer: 08010584.4
(22) Anmeldetag: 11.06.2008
(51) Int. Cl.: F16F 1/38, F16F 13/14

(54) **Elastomerlager insbesondere für Fahrwerksbuchsen**

(30) Priorität: 14.06.2007 DE 102007028041
(71) Anmelder: Carl Freudenberg KG, 69469 Weinheim (DE)
(72) Erfinder: Breiden, Oliver, 21075 Hamburg (DE); Schwarz, Helge, 21376 Garlstorf (DE); Werner, Philipp, 21339 Lüneburg (DE); Hänel, Hardy, 20459 Hamburg (DE)

(57) **Zusammenfassung**

Elastomerlager (10), insbesondere Fahrwerksbuchse aus einem Metallkern (1), einer Elastomerfeder (2) und einer Außenhülse (3), wobei zumindest ein axiales Ende des Elastomerlagers mit einer elastischen Schutzkappe (5) versehen ist, welche die Stirnflächen (4) der Elastomerfeder abdeckt.

## Beschreibung

### Technisches Gebiet

Die Erfindung befasst sich mit einem Elastomerlager, insbesondere für Fahrwerksbuchsen, aus einem Metallkern, einer Elastomerfeder und einer Außenhülse.

Elastomerlager dieser Art haben eine vielseitige Anwendung, insbesondere als Fahrwerksbuchsen bei Kraftfahrzeugen. Die an solche Lager gestellten Anforderungen nehmen ständig zu. Insbesondere die steigende Leistungsdichte bei modernen Kraftfahrzeug-Verbrennungsmotoren, die Anordnung von zusätzlichen Aggregaten im Motorraum und die zunehmende Kapselung des Motorraums erhöhen die thermischen Anforderungen generell. Auch im schwingungstechnischen Bereich sind die Anforderungen gestiegen. Für die Federkörper werden bei diesen Lagern vielfach Elastomerfedem auf der Basis von Naturkautschuk verwendet. Vor allem bei dynamischer Belastung bietet der Naturkautschuk gegenüber anderen Elastomeren Vorteile hinsichtlich der mechanischen Eigenschaften. Der Einsatzbereich von Naturkautschuk ist jedoch auch bei der Verwendung spezieller Mischungen unter hoher dynamischer Belastung auf circa 100°C begrenzt. Bei einem dauerhaften Einsatz oberhalb dieser Temperatur beginnen sich die Vernetzungen zwischen den Elastomermolekülen wieder zu lösen. Bei hohen Betriebstemperaturen auch unterhalb der genannten Grenze wird Naturkautschuk durch Luftsauerstoff und Ozon angegriffen und die diesem Angriff ausgesetzten Oberflächen verhärten. Als Folge hiervon können die im Betrieb auftretenden Dehnungen nicht mehr aufgenommen werden und die Oberflächen der Elastomerfeder reißen ein. Dieses wird auch dadurch unterstützt, dass die Elastomere durch einfallende UV-Strahlung aus Sonnenlicht geschädigt werden und Dehnfähigkeit verlieren.

### Stand der Technik

Zum Stand der Technik wird beispielsweise auf die DE 1 868 891 U verwiesen, in der eine Lagerbuchse gezeigt ist, die aus einem gummielastischen Werkstoff besteht und die an ihren Gleitflächen mit Nuten zur Aufnahme von Schmiermitteln versehen ist.

Aus der DE 85 27 583 U1 ist eine Radiallagerbuchse bekannt geworden, mit einem metallischen Innenteil, einer äußeren Kalibrierhülse und einem dazwischen angeordneten Gummikörper. Der Gummikörper weist zwei miteinander in Verbindung stehende Ringkammern auf, die mit einer Dämpfungsflüssigkeit gefüllt sind. Bei einem Lager dieser Art können Schwingungen hoher Frequenz durch die Dämpfungsflüssigkeit gedämpft werden.

Die ältere Patentanmeldung 10 2006 053 166 befasst sich mit der thermischen Belastung im Motorraum für solche Lager und schlägt vor, den metallischen Kern mit einer Hülle aus einem isolierenden Kunststoff zu ummanteln. Hierdurch wird der Federkörper vom direkten Wärmefluss abgeschirmt. Dabei kann diese Vorgehensweise sowohl bei den weit verbreiteten Lagerbuchsen mit einem Federkörper in Ringform als auch bei Lagerbuchsen mit Flüssigkeitskammern angewendet werden.

### Darstellung der Erfindung

Der Erfindung liegt die Aufgabe zugrunde, ein Elastomedager zu schaffen, welches den heute gestellten Anforderungen an Betriebsdauer auch bei hoher thermischer Belastung und aus der Umwelt herrührender Schädigungen standhält.

Die Lösung der gestellten Aufgabe wird mit den Merkmalen des Anspruchs 1 erreicht. Die Unteransprüche 2 bis 10 stellen vorteilhafte Weiterbildungen des Erfindungsgegenstandes dar.

Um das Elastomerlager gegen schädigende Umweltmechanismen zu schützen, wird gemäß der Erfindung vorgeschlagen, dass zumindest das den Umwelteinflüssen am meisten ausgesetzte axiale Ende des Elastomerlagers mit einer elastischen Schutzkappe versehen wird, welche die Seitenflächen der Elastomerfeder abdeckt. Auf diese Weise wird das dynamisch hochbelastete Elastomerbauteil des Lagers gegen die umgebende Atmosphäre und damit vor Sauerstoffoxidation und Ozonangriff sowie vor der einfallenden UV-Strahlung, vor Feuchtigkeit und Schmutz geschützt. Diese Maßnahme ist sowohl bei den so genannten konventionellen Fahrwerksbuchsen mit einem ringförmigen Federkörper als auch bei Lagerbuchsen mit Flüssigkeitskammern anwendbar. Darüber hinaus ist diese Maßnahme sehr kostengünstig und lässt eine einfache Montage zu, sowohl bei neu gefertigten Lagern als auch bei bereits vorhandenen Lagern.

Die Schutzkappe selbst wird aus einem Elastomer mit geringer Gaspermeabilität und hoher UV-Stabilität hergestellt, so dass sie selbst eine lange Lebenszeit hat.

Um den Schwingbewegungen des Lagers folgen zu können, wird die Schutzkappe balgartig ausgebildet und umgreift mit ihren Enden den Metallkern und die Außenhülse. Zur Unterstützung der Befestigung der Enden der Schutzkappe am Metallkern bzw. an der Außenhülse werden die Enden der Schutzkappe verstärkt sein und damit durch die eigene Spannung festgehalten. Die Schutzkappenwand kann gewellt sein, so dass sie leicht den Schwingbewegungen folgt. Die Befestigung der Enden der Schutzkappe auf dem Metallkern bzw. der Außenhülse kann auch durch Verkleben oder auch durch Anbringen von Schellen erfolgen. Möglich ist auch, die Enden der Schutzkappe und/oder des Metallkerns bzw. der Außenhülse mit umlaufenden Ringnuten und korrespondierenden Vorsprüngen zu versehen, wodurch jede der voranstehenden Befestigungsarten noch unterstützt werden kann.

### Kurzbeschreibung der Zeichnung

Anhand der in der Zeichnung dargestellten Ausführungsbeispiele wird die Erfindung nachstehend näher erläutert.

Es zeigt:
- Fig. 1: ein Elastomerlager mit einer Elastomerfeder in Ringform, teilweise in der Ansicht und teilweise im Längsschnitt,
- Fig. 2 bis Fig. 4: verschiedene Befestigungsmöglichkeiten der Schutzkappe am Elastomerlager und

- Fig. 5: ein Elastomerlager mit Flüssigkeitskammer, teilweise im Längsschnitt

### Ausführung der Erfindung

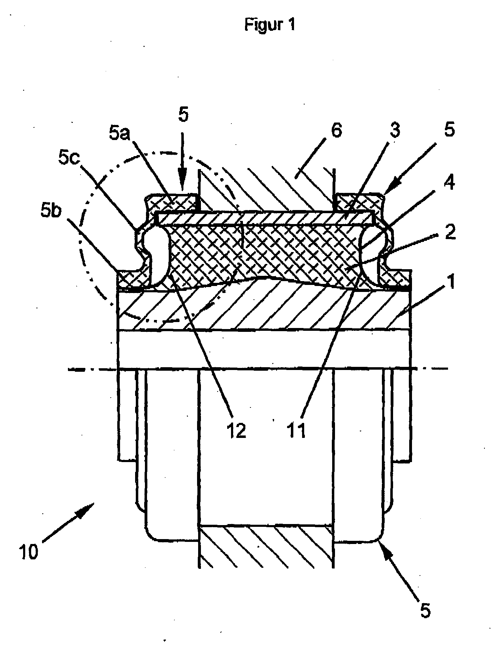

In der Figur 1 ist ein Elastomerlager 10 für eine Fahrwerksbuchse gezeigt, das aus dem Metallkern 1, der Elastomerfeder 2 und der Außenhülse 3 besteht. Das Elastomerlager 10 ist ein herkömmliches Lager mit einer ringförmigen Elastomerfeder 2. Die Stirnflächen 4 an beiden axialen Enden 11 und 12 der Elastomerfeder 2 sind durch die elastischen Schutzkappen 5 abgedeckt. Die Schutzkappen 5 sind aus einem Elastomer mit geringer Gaspermeabilität und einer hohen UV-Stabilität hergestellt, Die Schutzkappe 5 ist balgartig ausgebildet und umfasst mit ihrem Ende 5a die Außenhülse 3 und mit ihrem Ende 5b den Metallkern 1. Die Schutzkappenwand 5c ist elastisch ausgebildet, was durch die Wellenform noch unterstützt wird. Die Enden 5a und 5b der Schutzkappe 5 haben eine größere Dicke als die dazwischen liegende Schutzkappenwand 5c. Außerdem sind die Schutzkappen so gefertigt, dass ihre Enden 5a und 5b im Innendurchmesser kleiner sind als die Außendurchmesser des Metallkerns 1 und der Außenhülse 3. Sie können deshalb diese Teile spannend umgreifen. Dadurch wird eine gut haftende Verbindung zwischen der Schutzkappe 5 und den Teilen 1 und 3 erreicht. Ergänzend hierzu können die Teile auch noch verklebt werden. Bei der Montage des Elastomerlagers 10 wird das Lager 10 ohne die Schutzkappen 5 zunächst in die Bohrung des das Lager aufnehmenden Bauteils 6 eingepresst. Danach werden die Schutzkappen 5 auf den Metallkern 1 und die Außenhülse 3 aufgeschoben. Die Elastizität der Schutzkappen 5, seine geringe Wandstärke sowie die wellige Form lassen die im Betrieb auftretenden Relativbewegungen zwischen Metallkern 1 und Außenhülse 3 zu, ohne dass die Steifigkeit des Elastomerlagers 10 dabei beeinträchtigt wird.

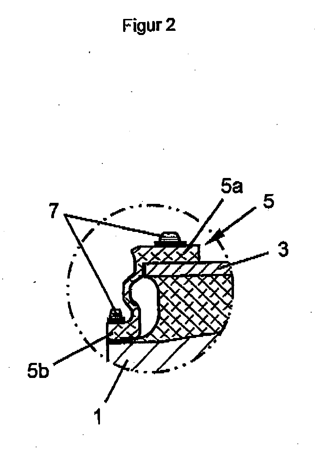

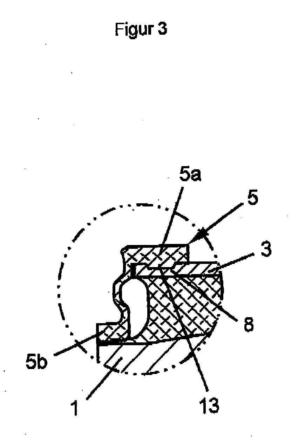

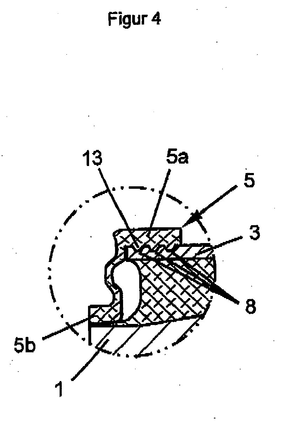

In den Figuren 2 bis 4 sind verschiedene Möglichkeiten der Befestigung der Schutzkappe 5 auf dem Elastomerlager 10 gezeigt. Dabei wird jeweils nur der im strichpunktierten Kreis eingefasste Bereich des Lagers aus der Figur 1 dargestellt. In der Figur 2 ist schematisch die Möglichkeit gezeigt, die Enden 5a und 5b der Schutzkappe 5 mit dem Metallkern 1 und der Außenhülse 3 mittels der Schellen 7 zu befestigen. Die Figur 3 zeigt eine Möglichkeit, bei der die Außenhülse 3 mit einer Ringnut 8 versehen ist, in die ein entsprechend ausgestalteter Vorsprung 13 des Endes 5a der Schutzkappe 5 eingreift. In der Figur 4 ist eine Befestigungsmöglichkeit gewählt, bei der die Außenhülse 3 mehrere Ringnuten 8 hat und das Ende 5a der Schutzkappe 5 mit mehreren korrespondierenden Wülsten 13 versehen ist.

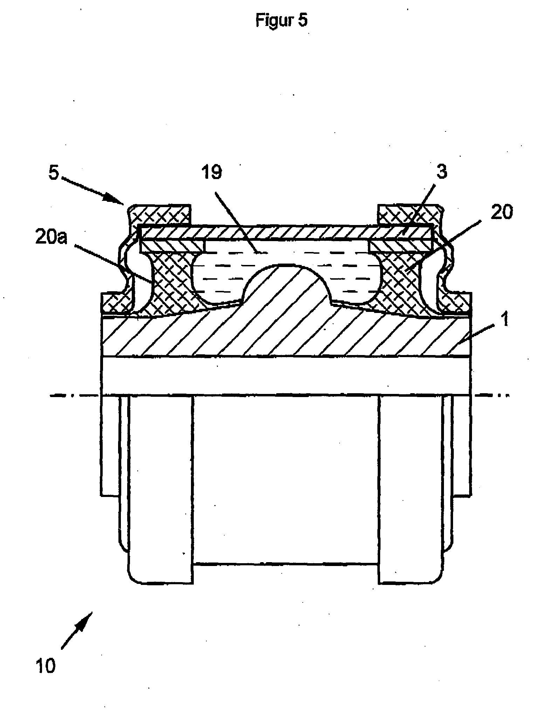

In der Figur 5 ist eine Ausführungsform des Elastomerlagers 10 gezeigt, bei der das Elastomerlager 10 in an sich bekannter Weise mit zwei Flüssigkeitskammern 19 versehen ist, die sich radial gegenüberliegen und die durch einen Dämpfungskanal miteinander verbunden sind. Ein solches Elastomerlager 10 wird insbesondere zur Dämpfung von hochfrequenten Schwingungen verwendet. Bei einem solchen Elastomerlager 10 ist der Schutz der Kammerwände 20 von besonderer Bedeutung, da sie durch die dynamischen Druckänderungen in den Kammern 19 stark belastet sind und hoch beansprucht werden. Wenn die Kammerwände 20 an ihren Stirnflächen 20a durch Sauerstoffoxidation und Ozonangriff an Elastizität und Festigkeit in Folge von Versprödung verlieren, kann es frühzeitig zum Versagen der Kammerwände 20 und damit zum Ausfall des Elastomerlagers 10 kommen. Der Einsatz der Schutzkappen 5 ist bei dieser Bauform somit von besonderer Bedeutung.

## Patentansprüche

1. Elastomerlager, insbesondere für Fahrwerksbuchsen aus einem Metallkern, einer Elastomerfeder und einer Außenhülse, **dadurch gekennzeichnet, dass** zumindest ein axiales Ende (11, 12) des Elastomerlagers (10) mit einer elastischen Schutzkappe (5) versehen ist, welche die Stirnflächen (4) der Elastomerfeder (2) abdeckt.

2. Elastomerlager nach Anspruch 1, **dadurch gekennzeichnet, dass** die Schutzkappe (5) aus einem Elastomer mit geringer Gaspermeabilität besteht.

3. Elastomerlager nach einem der Ansprüche 1 oder 2, **dadurch gekennzeichnet, dass** die Schutzkappe (5) aus einem Elastomer mit hoher UV-Stabilität besteht.

4. Elastomerlager nach einem der Ansprüche 1 bis 3 , **dadurch gekennzeichnet, dass** die Schutzkappe (5) balgartig ausgebildet ist und mit ihren Enden (5a, 5b) den Metallkern (1) und/oder die Außenhülse (3) spannend umgreift.

5. Elastomerlager nach einem der Ansprüche 1 bis 4, **dadurch gekennzeichnet, dass** die Enden (5a, 5b) der Schutzkappe (5) eine größere Dicke als die dazwischen liegende Schutzkappenwand (5c) haben.

6. Elastomerlager nach einem der Ansprüche 1 bis 5, **dadurch gekennzeichnet, dass** die Schutzkappenwand (5c) gewellt ist.

7. Elastomerlager nach einem der Ansprüche 1 bis 6, **dadurch gekennzeichnet, dass** die Enden (5a, 5b) der Schutzkappe (5) mit dem Metallkern (1) und/oder der Außenhülse (3) verklebt sind.

8. Elastomerlager nach einem der Ansprüche 1 bis 7, **dadurch gekennzeichnet, dass** die Enden (5a, 5b) der Schutzkappe (5) auf dem Metallkern (1) und/oder der Außenhülse (3) mittels Schellen (7) befestigt sind.

9. Elastomerlager nach einem der Ansprüche 1 bis 8, **dadurch gekennzeichnet, dass** die Enden (5a) der Schutzkappe (5) und/oder des Metallkerns (1) bzw. der Außenhülse (3) mit umlaufenden Ringnuten (8) und korrespondierenden Vorsprüngen (13) versehen sind.

10. Elastomerlager nach einem der Ansprüche 1 bis 9, **dadurch gekennzeichnet, dass** das Elastomerlager (10) mit Flüssigkeitskammern (19) zur Dämpfung von hochfrequenten Schwingungen versehen ist.
